# EUROPEAN PATENT SPECIFICATION

(11) **EP 3 450 644 B1**
(45) Date of publication and mention of the grant of the patent: **08.10.2025**
(21) Application number: 17290109.2
(22) Date of filing: 29.08.2017
(51) Int. Cl.: F16F 7/10, E04H 9/02, F03D 13/20

(54) **ARRANGEMENTS AND METHODS FOR DAMPING OSCILLATIONS IN STRUCTURES**
ANORDNUNGEN UND VERFAHREN ZUR SCHWINGUNGSDÄMPFUNG IN STRUKTUREN
AGENCEMENTS ET PROCÉDÉS D'AMORTISSEMENT D'OSCILLATIONS DANS DES STRUCTURES

(43) Date of publication of application: 06.03.2019
(73) Proprietor: GE Renewable Technologies Wind B.V., 4817 PA Breda (NL)
(72) Inventor: Mechineau, Jonathan, 44200 Nantes (FR)
(74) Representative: de Rooij, Mathieu Julien

(56) References cited:
- EP-A1- 1 479 938
- WO-A1-2014/040598
- WO-A1-2017/036581
- WO-A2-2011/015563
- CN-A- 102 425 247
- DE-A1- 102006 022 430
- JP-A- 2015 001 117
- US-A- 5 265 387
- US-A1- 2013 174 509

## Description

The present disclosure relates to arrangements and methods for damping oscillations in structures, particularly for wind turbine towers. The present disclosure further relates to wind turbines comprising such arrangements.

### BACKGROUND

Vibration absorbers are commonly used in high and slender structures to attenuate vibrations. Tuned mass dampers, also known as harmonic absorbers, are devices mounted inside tower-like structures to reduce the amplitude of mechanical vibrations. These kinds of absorbers are used to prevent or at least reduce discomfort and/or damages of the structure.

Tuned mass dampers may be made as pendulum structures comprising a mass supported by ropes or arms restrained to the structure (e.g. a tower). The mass moves in accordance with the law of motion of a pendulum, storing and releasing potential energy similarly to a mass restrained by a spring, while the damping action is accomplished by damping elements arranged at an effective position to counteract the structure's vibration. Tuned mass dampers of the pendulum type generally require a lot of space within the structure, particularly for hanging the suspended mass and allowing the mass motions around a 360 Degrees angle.

Other types of tuned mass dampers, wherein a mass is suspended or arranged differently with respect to the main structure are also known. The natural frequency of mass-spring dampers is defined by the spring constant and the damping ratio is determined by the damping element thereby forming a system with a specific natural resonant frequency. Among these dampers, there are particular/unidirectional dampers confined to a single direction of motion, e.g. along a guide, including a track, a groove or a rail.

Dampers are frequently used in wind turbine towers and also in other applications, such as e.g. power transmission structures, automobiles, buildings/factories, construction sites, and all sorts of tower-like structures which are subjected to mechanical vibrations.

Particularly wind turbine towers may undergo undesired vibrations, i.e. oscillatory or repeating displacements in any direction (fore-aft vibrations, side-to-side or lateral vibrations, longitudinal vibrations, torsional vibrations, etc.) of any amplitude and of any frequency (high or low, constant or varying) during operation. These vibrations may be caused by different factors, e.g. winds acting on the tower, blades passing along the tower and locally disturbing the wind flow, vibrations transmitted from the gearbox to the tower, rotor movements, nacelle imbalances, vibrations from the hub transmitted to the tower, vibrations caused by wave loading for offshore wind turbine, etc.

If a tower is subjected to vibrations or oscillations during a prolonged period of time, fatigue damage may result. Fatigue damage may lead to a reduced life time of the wind turbine tower and/or its components. Furthermore, a danger exists that when vibrations cause resonance in the wind turbine tower, this can lead to a potentially dangerous increase of the vibrations which in turn leads to an increase in movements of the structure in and out its rest position which may result in potential structural damages of the structure. A further complicating factor is that the size of wind turbines (rotor, nacelle, tower, etc.) keeps increasing.

As towers become higher and softer, the effect of vibrations becomes more critical.

Omni-directional dampers placed inside wind turbine towers can have very high deflection which needs to be constrained to fit into the structure. For example, in a wind turbine tower section which already comprises other elements like but not restricted to an elevator, a ladder, a hoisting area, etc...

Uni-directional damper used alone may not be effective to dampen vibrations and/or oscillations with varying wind and/or waves conditions as the direction of oscillations may be constantly varying.

Document WO2017/036581 A1 discloses damping arrangements for damping vibrations of buildings or machine installations, as well as wind turbine towers comprising damping arrangements.

### SUMMARY

In accordance with a first aspect, a wind turbine tower according to claim 1 is provided.

According to this aspect, two unidirectional tuned mass dampers are provided within a wind turbine tower. The mass dampers are configured to displace along different displacement directions that are arranged at an angle with respect to each other. This way, a variety of directions of oscillations can be attenuated along these two well-defined displacement directions thereby providing two oscillation/vibration absorption paths. For example, varying directions of oscillations due to varying wind and/or wave conditions in e.g. offshore wind turbine towers can be decomposed in these two directions of displacement of each tuned mass damper thereby providing two oscillations and/or vibrations absorption paths. This enhances vibration and/or oscillation reduction in a structure and provides damping of oscillations in a variety of directions.

Furthermore, by mounting the masses of the dampers vertically separated from each other each mass can clearly perform its own reciprocating movement, thereby contributing to provide these two well-defined damping directions. Moreover, as the dampers are two separated systems in circumstances, each damper might be tuned or adapted to a specific resonant frequency (whenever convenient or desirable) thereby broadening the range of amplitude of oscillations that can be damped with an arrangement substantially as hereinbefore described. It is thus a quite versatile damping arrangement.

### BRIEF DESCRIPTION OF THE DRAWINGS

Non-limiting examples of the present disclosure will be described in the following, with reference to the appended drawings, in which:
Figure 1 shows a perspective view of an example of damping arrangement for counteracting oscillations in a tower;
Figure 2 shows a top view of the example of figure 1;
Figure 3 shows a perspective view of another example of damping arrangement for counteracting oscillations in a tower;
Figures 4 shows a perspective view of a further example of damping arrangement for counteracting oscillations in a tower;
Figure 5 shows a cross-sectional view along line C-C of figure 2; and
Figure 6 shows various examples of a wind turbine tower including a damping arrangement.

### DETAILED DESCRIPTION OF EXAMPLES

In these figures the same reference signs have been used to designate matching elements.

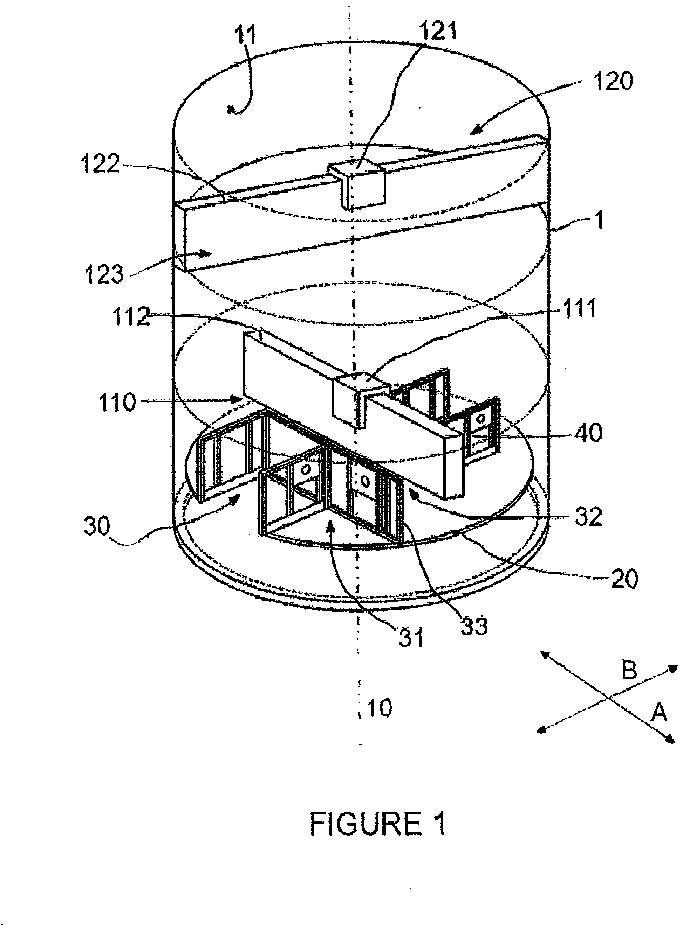

Figure 1 shows a close-up view of a portion of a tower section 1 that was depicted partly transparent in order to show in perspective a damping arrangement 100 arranged inside the tower. The damping arrangement 100 comprises a bottom unidirectional mass damper 110 and a top unidirectional mass damper 120.

The bottom unidirectional mass damper 110 comprises a bottom mass 111 configured to perform a reciprocating movement e.g. by moving along a bottom guide 112. The top unidirectional mass damper 120 comprises a top mass 121 configured to perform a reciprocating movement e.g. by moving along a top guide 122. And the top 122 and bottom 112 guides are attached to an inner surface 11 of the tower.

In the example of figure 1, arrow A represents the direction of reciprocating movement of the bottom mass 111 along the bottom guide 112 and arrow B represents the direction of reciprocating movement of the top mass 121 along the top guide 122.

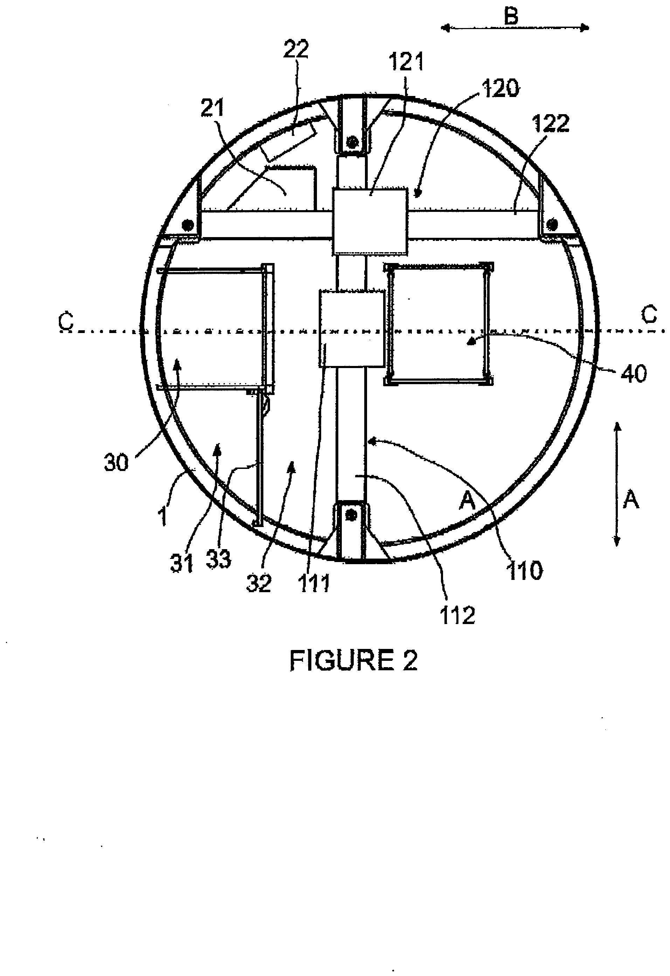

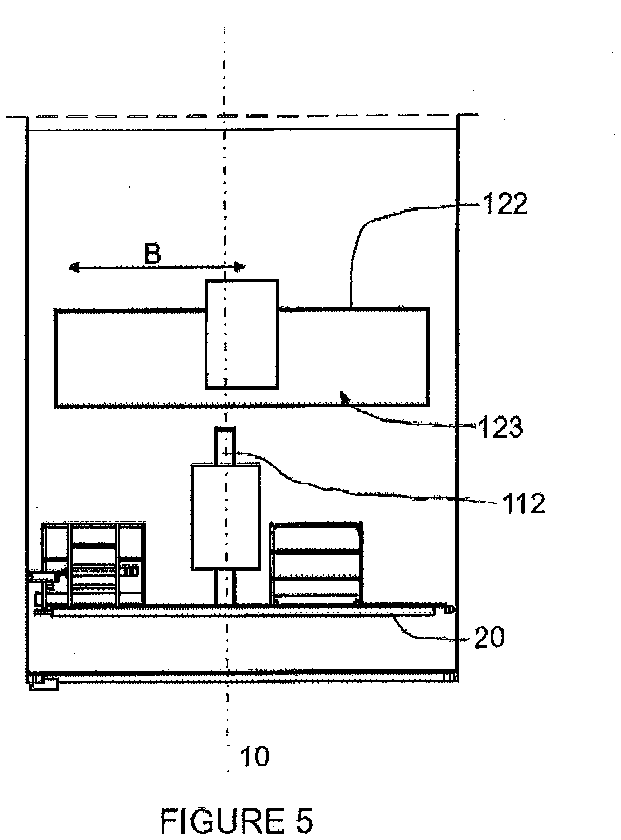

Figures 2 and 5 show respectively a top view and a cross-sectional view along line C-C of the example of figure 1. As shown in these figures, such directions (arrows A and B) of reciprocating movements are substantially perpendicular with respect to each other. By doing this, and considering the fact that substantially all direction of oscillation/vibration of the tower can be decomposed in two perpendicular directions, then damping arrangements substantially as hereinbefore described can attenuate vibrations in these two well-defined perpendicular directions provided by the perpendicular reciprocating movements. This way, damping of vibrations/oscillations due to e.g. varying wind forces (and/or wind gusts) from substantially 360º around the tower can be done. This enhances vibrations/oscillations absorption capacity of the damping arrangement and provides an omni-directional damping performance whatever the direction of loading/oscillation.

In examples, as further shown in figure 1, the directions of reciprocating movements (arrows A and B) are substantially perpendicular to a longitudinal axis 10 of the tower 1.

Furthermore, in the example shown in figure 1, the top guide 122 comprises a single straight rail and the bottom guide 112 comprises another single straight rail. In these examples, the top and bottom masses 121 and 111 may be connected to the rails by springs or other similar resilient elements so as to behave as a mass-spring damper performing a reciprocating movement.

Throughout the present description and claims for dampers having a mass configured to be driven along a guiding surface, each guiding surface defines a path in a single direction for the mass to perform a reciprocating movement along such a direction.

In alternative examples, other types of unidirectional tuned mass dampers may be foreseen. For example, dampers in which the mass is configured to be driven along a guiding surface, including curved guiding surfaces, two or more rails, tracks or grooves may be foreseen.

In accordance with the invention, an access platform is provided below the tuned mass damper that is arranged at a lower vertical position along a longitudinal length of the tower structure.

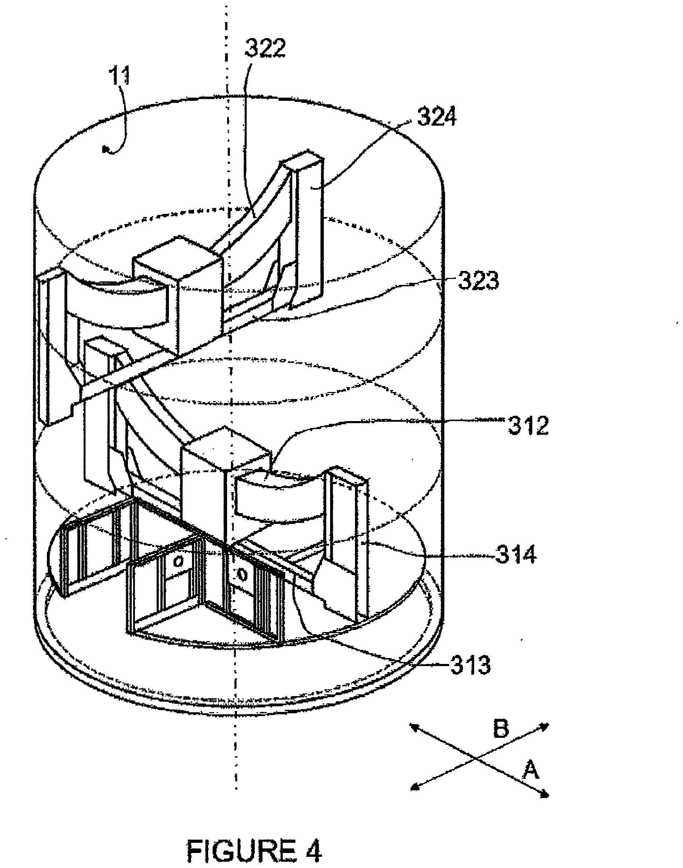

As further shown in the example of figure 1, a lower access platform 20 is provided below the bottom mass damper 110. The lower platform 20 provides maintenance access to the bottom mass damper 110. In examples, the lower platform 20 may comprise a security fence or handrail for keeping maintenance personnel secure. In the lower platform 20 a temporary step ladder or a temporary movable lifting platform or individual platform may further be provided to inspect to the top mass damper 120. Alternatively, as shown in figure 4, a further fixed platform 21 (with or without fixed ladder) may be attached (welded or bolted or otherwise joined) to e.g. a lower portion 123 of the top guide 122 to provide access to the top damper 120, for example, for inspection and/or corrective maintenance.

In examples, the lower platform 20 may be one of the working platforms typically arranged at various altitudes along the height of e.g. a wind turbine tower with the purpose of allowing maintenance personnel to leave the elevator cabin and inspect or repair equipment where intended or needed.

The lower platform 20 is provided with an area for an elevator path (hoistway) 30 and with a hoisting area 40. These are typical elements needed inside wind turbine towers. As shown in the view of figure 2, the hoisting area 40 in e.g. a wind turbine tower, is typically provided at a diametrically opposite area/space from the elevator path 30. Therefore, the bottom mass damper 110 arranged substantially in between these two areas 30 and 40 does not hinder up-down movements along these areas 30 and 40.

In examples, the hoisting area may also be provided with handrails or a security fence. In circumstances, the hoisting area may be temporarily covered and/or its handrails may be temporarily removed to perform inspections.

In accordance with the invention, a center point of the bottom mass damper reciprocating movement is arranged with a horizontal offset of a predetermined value with respect to a center point of the top mass damper reciprocating movement. In accordance with the invention, the center point of the bottom mass damper reciprocating movement substantially coincides with a geometric center of the tower structure, particularly a geometric center of a horizontal cross-section of the tower at a height at which the dampers are fixed to the tower.

As further shown in the view of figure 2, a center point of the bottom mass damper 110 reciprocating movement along arrow A substantially coincides with the geometric center (in a cross-section) of the tower 1. Particularly in this case, the tower 1 has a circular cross-sectional shape and its geometric center thus coincides with a geometric center of the circular cross-section around its longitudinal axis 10. Furthermore, the top mass damper 120 is provided with a horizontal offset with respect to such a geometric center. This way, up-down movements along at least the two areas, elevator path 30 and hoisting area 40, are not hindered by the provision of two mass dampers at the same time as it provides for two perpendicular directions along which attenuation of varying forces acting on the structure/tower can be done substantially as explained above.

In this example, the center point of top mass damper 120 reciprocating movement along arrow B is arranged with an offset with respect to the center point of the bottom mass damper 110 reciprocating movement along arrow A.

The offset may thus be defined as a function of the space needed for the areas needed inside the structure/tower. Put in other words, the offset may be defined as a function of an elevator path and/or of a hoisting area and/or an access ladder and/or cables/pipes that may be provided inside the tower structure.

In examples, as further shown in figure 1, the lower platform 20 further comprises a safe area 31 providing access from e.g. the elevator path 30 (or a ladder) to a maintenance walkway area 32 and along this walkway area 32 to e.g. a fixed platform 21 (see the view of figure 2) attached to a lower portion of the top damper 120. In these examples, the safe area 31 may be closed by a gate or handrail 33 and may enable visualisation of the damper's performance and motion prior to effectively entering a maintenance walkway area 32.

In examples, the safe area may further provide controls and potentially emergency electrical feeding to activate/de-activate the unidirectional dampers.

Particularly as shown in the view of figure 2, the tower 1 has a substantially circular cross-section shape having a radius (for a specific height of the tower). In this example, the offset may be half this radius. In more examples, the offset may be up to 2/3 of the radius. And in tower structures having a different cross-sectional shape the offset predetermined value may be up to 2/3 of a length from the geometric center of the cross-section of the tower structure (which in this example substantially coincides with the center point of the bottom mass absorber reciprocating movement along arrow A) towards an inner surface of the sidewall of the tower structure.

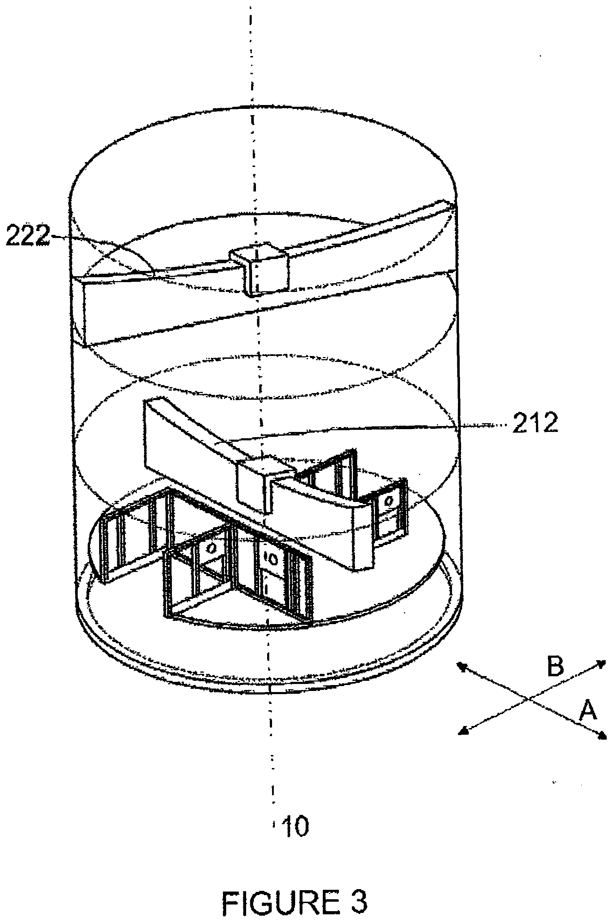

Figure 3 shows a perspective view of another example of damping arrangement for counteracting oscillations in a tower. The structure and operation of this example is substantially the same as that of figure 1. Particularly, the example shown in figure 3 differs from that of figure 1 merely in that the top and bottom guides are arc-shaped guiding rails 222 and 212 in the form of an arc-shaped track.

Figure 4 shows a perspective view of a further example of damping arrangement for counteracting oscillations in a tower. The structure and operation of this example is also substantially the same as that of figure 1. In particular, the example shown in figure 4 differs from that of figure 1 in that the bottom and top guides comprise a convexly curved (when seen from front) guiding surface 312, 322 and a lower support 313, 323, e.g. a straight crossbeam. The guiding surface 312, 322 and the lower support 313, 323 are fixed to lateral supports 314, 324 that may be welded or bolted to the inner surface 11 of the tower sidewall.

Further, in the example of figure 4, the convexly curved guiding surface is an arc of a predetermined radius of curvature. In some examples, the radius of curvature may be variable.

In alternative examples, instead of fixing the guides to the inner surface of the structure sidewall, the guides may be attached to a flange joint joining two consecutive tower sections.

In examples, the top and bottom guides may be defined e.g. by one or more channels or grooves machined in a surface. Alternatively, two or more rails, grooves or tracks may be foreseen. The guides may be made from e.g. metals having good mechanical properties in terms of thermal expansion, rigidity, abrasion resistance, wear, etc.

In all examples, the top and bottom masses may be configured to perform a reciprocating movement along a displacement axis along the top and bottom guides. Details showing how the masses may be displaceably arranged on the guides are known from conventional mass dampers, independently on the type of guides being used.

In all examples, the masses may adopt a wide variety of shapes and/or sizes, and they may be made as a single integral piece or formed as various parts being put together. Since the unidirectional dampers are attached to the tower, when the tower oscillates due to external forces acting on it, the masses of the dampers can displace with respect to the guides in response to such oscillations thereby providing a damping effect. By varying the shape and size of the moving masses, their distance to the guides, and/or the radius of curvature of the guides, the frequency of the dampers may be tuned to adapt to variation of excitation frequencies.

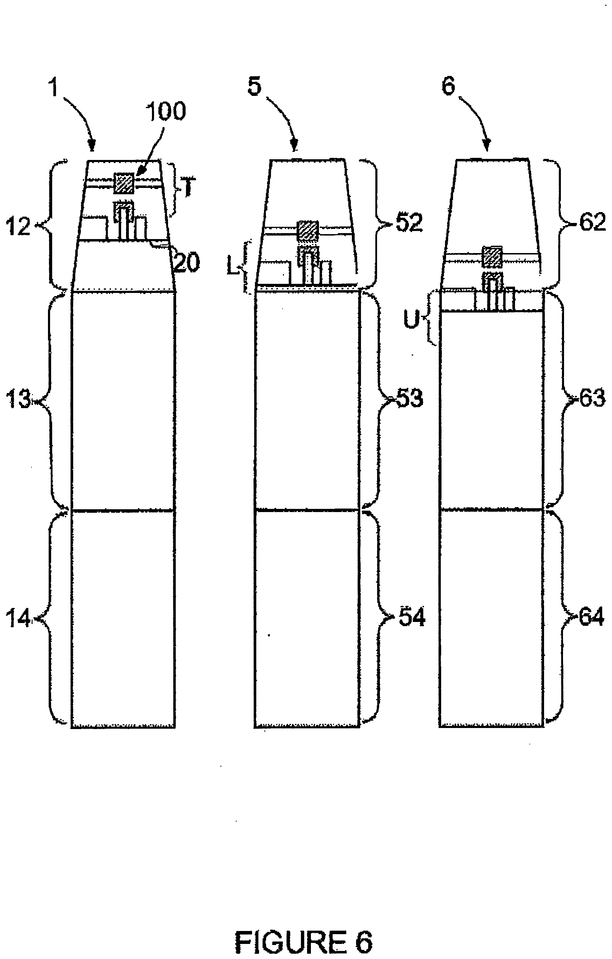

Figure 6 shows various examples of wind turbine towers 1, 5, 6 comprising a plurality of tower sections, e.g. an uppermost tower section 12, 52, 62, a middle tower section 13, 53, 63 and a lowermost or bottom tower section 14, 54, 64, and a damping arrangement 100 substantially as hereinbefore described. In towers 1 and 5 (the figures of the left and the middle), the damping arrangement 100 is provided inside the uppermost tower section 12, 52. Particularly, tower 1 shows the damping arrangement 100 provided at a top portion T of the uppermost tower section 12 whereas tower 5 shows the damping arrangement 100 provided at a lower portion L of the uppermost tower section 52.

In a further example, as shown for tower 6, the damping arrangement 100, is provided between a lower portion, particularly the bottom, of the uppermost tower section 62 and a top portion U of the middle tower section 63.

As shown in figure 6, particularly in case of wind turbines towers, damping arrangements substantially as hereinbefore described may be placed as close as possible to a top of the wind turbine tower as space limitations at the top of a wind turbine tower allows. This provides the highest efficiency by attenuating the tower's first natural frequency.

In some examples, the damping arrangement may be provided inside an upper half of a whole height of the tower structure.

Damping arrangements substantially as hereinbefore can thus be easily retrofitted in existing structures, particularly tower structures comprising a single tuned mass damper (first unidirectional mass damper) attached to the tower structure. And the first mass damper has a mass configured to perform a reciprocating movement along a displacement axis in response to oscillations of the tower structure.

In non-claimed examples, a method for retrofitting such tower structures may comprise defining one or more vertical areas inside the tower structure configured to house a vertical up and down movement of e.g. an elevator cabin and/or a hoisting system. Once these areas are defined, the method may further comprise providing a second unidirectional tuned mass damper having a second mass configured to perform a second reciprocating movement along a second displacement axis in response to oscillations of the tower structure. And attaching the second tuned mass damper to the tower structure with the second displacement axis arranged at an angle, particularly a substantially 90º angle, with respect to the first displacement axis at the same time as the second mass is vertically separated from the first mass. And arranging a center of the first and/or second reciprocating movement with a horizontal offset of a predetermined value from a geometric center of the tower structure at the height of the structure at which the damper is attached to the structure. The offset may be defined as a function of the space previously defined as vertical areas. By doing this, both reciprocating movements do not interfere with the previously delimited vertical areas housed within the tower structure.

In some examples, the first and second displacement axes may be provided substantially perpendicular to a longitudinal axis of the tower structure.

In examples, damping arrangements for counteracting oscillations of a wind turbine tower structure may comprise a first unidirectional mass absorber having a first unidirectional mass configured to perform a first reciprocating movement along a first displacement guide in response to oscillations of the wind turbine tower structure, and a second unidirectional mass absorber having a second unidirectional mass configured to perform a second reciprocating movement along a second displacement guide in response to oscillations of the wind turbine tower structure. The second unidirectional mass may be arranged vertically separated from the first unidirectional mass. The first and second displacement guides may be substantially perpendicular with respect to each other.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. Reference signs related to drawings are placed in parentheses in the claims, and are solely for attempting to increase the intelligibility of the claims, and shall not be construed as limiting the scope of the claims.

## Claims

1. A wind turbine tower (1; 5; 6) comprising a plurality of tower sections (12, 13, 14; 52, 53, 54; 62, 63, 64) and a damping arrangement (100) for counteracting oscillations of the wind turbine tower (1; 5; 6), the damping arrangement (100) being provided inside the upper half of a height of the tower (1; 5; 6) and comprising:
a first tuned mass damper (110) having a first mass (111) configured to perform a first reciprocating movement along a first displacement axis in response to oscillations of the wind turbine tower (1; 5; 6), and
a second tuned mass damper (120) having a second mass (121) configured to perform a second reciprocating movement along a second displacement axis in response to oscillations of the wind turbine tower (1; 5; 6), wherein a center point of the second reciprocating movement along the second displacement axis is arranged with a horizontal offset of a predetermined value with respect to a center point of the first reciprocating movement along the first displacement axis,
wherein the second mass (121) is arranged vertically separated from the first mass (111), and
the first and second displacement axes are arranged at an angle with respect to each other, **characterized in that**
the center point of the first reciprocating movement along the first displacement axis substantially coincides with a geometric center of the wind turbine tower (1; 5; 6) and **in that**,
the damping arrangement (100) further comprises a lower access platform (20) arranged below one of the first and second tuned mass dampers (110, 120) that is mounted at a lower vertical position along a longitudinal length of the wind turbine tower.

2. The wind turbine tower of claim 1, wherein the first and second displacement axes are substantially perpendicular to each other.

3. The wind turbine tower of claim 1 or 2, wherein the horizontal offset is defined as a function of an elevator path (30) or of a hoisting area (40) extending vertically inside the wind turbine tower (1; 5; 6).

4. The wind turbine tower of any of claims 1 - 3, wherein the offset predetermined value is up to 2/3 of a length from the center point of the first and/or second reciprocating movements towards an inner surface (11) of a sidewall of the wind turbine tower.

5. The wind turbine tower of any of claims 1 - 4, wherein the first and second tuned mass dampers (110, 120) are fixed to the wind turbine tower (1; 5; 6).

6. The wind turbine tower of any of claims 1 - 5, wherein the first and second masses (111, 121) are configured to be driven along a guiding surface (112, 122; 212, 222; 312, 322) fixed to the wind turbine tower (1; 5; 6).

7. The wind turbine tower of claim 6, wherein the guiding surface (112, 122) is straight.

8. The wind turbine tower of any of claims 1 - 7, wherein the lower access platform (20) further comprises having a safe area closed by a gate or handrail (33).

9. The wind turbine tower of claim 8, comprising a further access platform (21) fixed to a lower portion of the other of the first and second tuned mass damper (110, 120).

## Patentansprüche

1. Windturbinenturm (1; 5; 6), der eine Vielzahl von Turmabschnitten (12, 13, 14; 52, 53, 54; 62, 63, 64) und eine Dämpfungsanordnung (100) zum Ausgleichen von Schwingungen des Windturbinenturms (1; 5; 6) umfasst, wobei die Dämpfungsanordnung (100) innerhalb der oberen Hälfte einer Höhe des Turms (1; 5; 6) vorgesehen ist und umfasst:
einen ersten Schwingungstilger (110), der eine erste Masse (111) aufweist, die dazu ausgelegt ist, als Reaktion auf Schwingungen des Windturbinenturms (1; 5; 6) eine erste Hin- und Herbewegung entlang einer ersten Verschiebungsachse auszuführen, und
einen zweiten Schwingungstilger (120), der eine zweite Masse (121) aufweist, die dazu ausgelegt ist, als Reaktion auf Schwingungen des Windturbinenturms (1; 5; 6) eine zweite Hin- und Herbewegung entlang einer zweiten Verschiebungsachse auszuführen, wobei ein Mittelpunkt der zweiten Hin- und Herbewegung entlang der zweiten Verschiebungsachse mit einem horizontalen Versatz eines vorbestimmten Werts in Bezug auf einen Mittelpunkt der ersten Hin- und Herbewegung entlang der ersten Verschiebungsachse angeordnet ist,
wobei die zweite Masse (121) von der ersten Masse (111) vertikal getrennt angeordnet ist, und
die erste und die zweite Verschiebungsachse in einem Winkel zueinander angeordnet sind, **dadurch gekennzeichnet, dass**
der Mittelpunkt der ersten Hin- und Herbewegung entlang der ersten Verschiebungsachse im Wesentlichen mit einem geometrischen Zentrum des Windturbinenturms (1; 5; 6) übereinstimmt, und dadurch, dass
die Dämpfungsanordnung (100) ferner eine untere Zugangsplattform (20) umfasst, die unterhalb eines des ersten und zweiten abgestimmten Schwingungstilgers (110, 120) angeordnet ist, der an einer unteren vertikalen Position entlang einer Längslänge des Windturbinenturms montiert ist.

2. Windturbinenturm nach Anspruch 1, wobei die erste und die zweite Verschiebungsachse im Wesentlichen senkrecht zueinander stehen.

3. Windturbinenturm nach Anspruch 1 oder 2, wobei der horizontale Versatz als Funktion eines Aufzugswegs (30) oder eines Hebebereichs (40) definiert ist, der sich vertikal innerhalb des Windturbinenturms (1; 5; 6) erstreckt.

4. Windturbinenturm nach einem der Ansprüche 1-3, wobei der vorbestimmte Versatzwert bis zu 2/3 einer Länge vom Mittelpunkt der ersten und/oder zweiten Hin- und Herbewegungen in Richtung einer Innenfläche (11) einer Seitenwand des Windturbinenturms beträgt.

5. Windturbinenturm nach einem der Ansprüche 1-4, wobei der erste und der zweite abgestimmte Schwingungstilger (110, 120) an dem Windturbinenturm (1; 5; 6) befestigt sind.

6. Windturbinenturm nach einem der Ansprüche 1-5, wobei die erste und die zweite Masse (111, 121) dazu ausgelegt sind, entlang einer Führungsfläche (112, 122; 212, 222; 312, 322) angetrieben zu werden, die an dem Windturbinenturm (1; 5; 6) befestigt ist.

7. Windturbinenturm nach Anspruch 6, wobei die Führungsfläche (112, 122) gerade ist.

8. Windturbinenturm nach einem der Ansprüche 1-7, wobei die untere Zugangsplattform (20) ferner einen durch ein Tor oder ein Geländer (33) verschlossenen Sicherheitsbereich umfasst.

9. Windturbinenturm nach Anspruch 8, der eine weitere Zugangsplattform (21) umfasst, die an einem unteren Abschnitt des anderen der ersten und zweiten abgestimmten Schwingungstilger (110, 120) befestigt ist.

## Revendications

1. Tour (1 ; 5 ; 6) d'éolienne comprenant une pluralité de sections (12, 13, 14 ; 52, 53, 54 ; 62, 63, 64) de tour et un dispositif d'amortissement (100) pour contrer les oscillations de la tour (1 ; 5 ; 6) d'éolienne, le dispositif d'amortissement (100) étant prévu à l'intérieur de la moitié supérieure d'une hauteur de la tour (1 ; 5 ; 6) et comprenant :
un premier amortisseur dynamique accordé (110) ayant une première masse (111) conçue pour effectuer un premier mouvement de va-et-vient le long d'un premier axe de déplacement en réponse à des oscillations de la tour (1 ; 5 ; 6) d'éolienne, et
un second amortisseur dynamique accordé (120) ayant une seconde masse (121) conçue pour effectuer un second mouvement de va-et-vient le long d'un second axe de déplacement en réponse à des oscillations de la tour (1 ; 5 ; 6) d'éolienne, dans laquelle un point central du second mouvement de va-et-vient le long du second axe de déplacement est agencé avec un décalage horizontal d'une valeur prédéterminée par rapport à un point central du premier mouvement de va-et-vient le long du premier axe de déplacement,
dans laquelle la seconde masse (121) est disposée verticalement, séparée de la première masse (111), et
les premier et second axes de déplacement sont disposés inclinés l'un par rapport à l'autre, **caractérisée en ce que**
le point central du premier mouvement de va-et-vient le long du premier axe de déplacement coïncide sensiblement avec un centre géométrique de la tour (1 ; 5 ; 6) d'éolienne et **en ce que**,
l'dispositif d'amortissement (100) comprend en outre une plate-forme d'accès (20) inférieure agencée sous un amortisseur parmi les premier et second amortisseurs dynamiques accordées (110, 120) qui est montée au niveau d'une position verticale inférieure le long d'une longueur longitudinale de la tour d'éolienne.

2. Tour d'éolienne selon la revendication 1, dans laquelle les premier et second axes de déplacement sont sensiblement perpendiculaires l'un à l'autre.

3. Tour d'éolienne selon la revendication 1 ou 2, dans laquelle le décalage horizontal est défini en fonction d'un trajet d'ascenseur (30) ou d'une zone de levage (40) s'étendant verticalement à l'intérieur de la tour (1 ; 5 ; 6) d'éolienne.

4. Tour d'éolienne selon l'une quelconque des revendications 1 à 3, dans laquelle la valeur prédéterminée de décalage est jusqu'à 2/3 d'une longueur à partir du point central des premier et/ou second mouvements de va-et-vient vers une surface intérieure (11) d'une paroi latérale de la tour d'éolienne.

5. Tour d'éolienne selon l'une quelconque des revendications 1 à 4, dans laquelle les premier et second amortisseurs dynamiques accordés (110, 120) sont fixés à la tour (1 ; 5 ; 6) d'éolienne.

6. Tour d'éolienne selon l'une quelconque des revendications 1 à 5, dans laquelle les première et seconde masses (111, 121) sont conçues pour être entraînées le long d'une surface de guidage (112, 122 ; 212, 222 ; 312, 322) fixée à la tour (1 ; 5 ; 6) d'éolienne.

7. Tour d'éolienne selon la revendication 6, dans laquelle la surface de guidage (112, 122) est droite.

8. Tour d'éolienne selon l'une quelconque des revendications 1 à 7, dans laquelle la plate-forme d'accès (20) inférieure comprend en outre une zone de sécurité fermée par une porte ou une main courante (33).

9. Tour d'éolienne selon la revendication 8, comprenant une plate-forme d'accès (21) supplémentaire fixée à une portion inférieure de l'autre amortisseur parmi les premier et second amortisseurs dynamiques accordés (110, 120).
